Europäisches Patentamt

European Patent Office

Office européen des brevets

(19)

(11) Publication number : **0 433 931 B1**

(12) # EUROPEAN PATENT SPECIFICATION

(45) Date of publication of patent specification :
**18.01.95 Bulletin 95/03**

(51) Int. Cl.$^6$ : **G02F 1/1335**

(21) Application number : **90124320.4**

(22) Date of filing : **15.12.90**

(54) **Flat panel liquid crystal color display.**

(30) Priority : **18.12.89 US 452672**

(43) Date of publication of application :
**26.06.91 Bulletin 91/26**

(45) Publication of the grant of the patent :
**18.01.95 Bulletin 95/03**

(84) Designated Contracting States :
**DE FR GB IT**

(56) References cited :
**EP-A- 0 152 827**
**EP-A- 0 189 214**
**GB-A- 2 078 389**

(56) References cited :
**PATENT ABSTRACTS OF JAPAN, vol. 9, no. 13
(P-328)[1736], 19th January 1985 ; & JP-A-59
159 127
PATENT ABSTRACTS OF JAPAN, vol. 6, no.
175 (P-141)[1053], 9th September 1982 ; &
JP-A-57 90 618**

(73) Proprietor : **HONEYWELL INC.
Honeywell Plaza
Minneapolis MN 55408 (US)**

(72) Inventor : **Rupp, John A.
6266 W. Melinda Lane
Glendale, AZ 85308 (US)**

(74) Representative : **Rentzsch, Heinz, Dipl.-Ing. et
al
Honeywell Holding AG
Patent- und Lizenzabteilung
Postfach 10 08 65
D-63008 Offenbach (DE)**

## Description

This invention relates generally to flat panel, color, liquid crystal displays and, more particularly, to liquid crystal displays having a wide viewing angle and with reduced image noise patterns.

The use of liquid crystal color displays has proven attractive for many applications, such as avionic parameter displays used in an aircraft flight deck. The liquid crystal displays can be implemented in a flat panel configuration reducing the volume requirement resulting from the use of cathode ray displays.

However, the flat panel liquid crystal color displays of the prior art have had certain features that have compromised their acceptability. For example, the crossed polarizer, twisted nematic type of liquid crystal display has a transmission through the liquid crystal cell that is uninhibited for zero applied voltage. This liquid crystal display configuration is referred to as a normally white display and is used in many display applications such as in watches and calculators. In the present invention, the linear polarizers are oriented in a mutually parallel configuration, providing a display that normally provides no optical transmission when the liquid crystal is not activated and for which the optical transmission increases with applied voltage. Because of the properties of the liquid crystal material, undesired optical transmission can occur even in the liquid crystal cell off-state, as the result of the rotatory dispersion of polarized light introduced into the liquid crystal material.

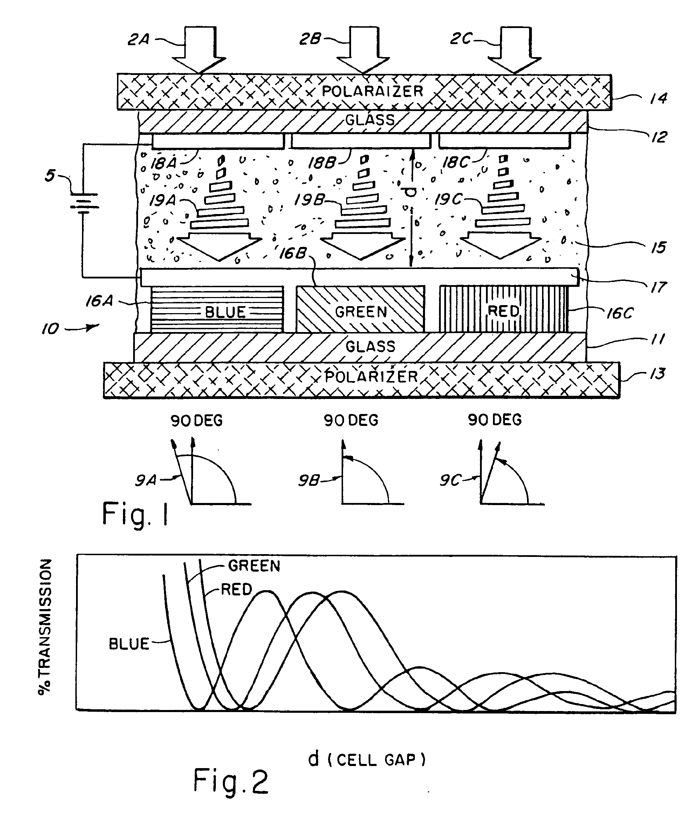

Referring to Fig. 1, the effect of the rotatory dispersion on the transmission of light in a color, liquid crystal flat panel display is shown. Rotatory dispersion is a result of the optical rotation being a function of wavelength, $\lambda$ . The flat panel display includes glass substrates 11 and 12 which enclose and contain the liquid crystal 15. A polarizer 14 is positioned on the exterior of substrate 12, while a polarizer 13 is positioned on substrate 11. On the interior surface of substrate 11 are positioned a multiplicity of color filters; blue filter 16A, green filter 16B, and red filter 16C are shown; and positioned over the interior surfaces of filters 16A through 16C is a transparent conducting electrode 17. The three filters permit the color of a single image pixel to be controlled. Positioned on an interior surface of substrate 12 are a plurality of transparent conducting electrodes 18A-18C, each conducting electrode proximate an associated filter (16A-16C). The electrodes 18A-18C can be individually addressed by a controllable voltage supply 5 using an addressing apparatus not shown. In the absence of a voltage applied between electrodes and when the liquid crystal material 15 is a twisted nematic material providing normally black display, then, as unpolarized light 2A-2C is applied to the display, the light is polarized by polarizer 14. The polarized light 19A-19C travels through the twisted nematic liquid crystal, the polarized light is rotated through an angle of approximately 90° and is absorbed by polarizer 13 (which is oriented parallel to polarizer 14). The rotatory dispersion of polarized light, resulting from the wavelength dependence of the birefringence of the liquid crystal material, will generally provide a rotation that is different from the desired 90° optical rotation by an amount that is a function of the wavelength of the radiation. Thus, not all the light is absorbed by polarizer 13 and the display has undesirable off-state transmission. As will be shown below, a thickness of liquid crystal material can be found for which the optical rotation of the transmitted (green) radiation will be essentially 90°, i.e., will include no undesired components as shown by graph 9B. However, the longer wavelength red radiation will, at this distance, have a rotation less than 90°, cf. graph 9c; while the shorter wavelength blue radiation will be rotated through an angle greater than 90°, cf. graph 9A.

In an article by C.H. Gooch et al entitled "The Optical Properties of Twisted Nematic Liquid Crystals with Twist Angles 90°" in J. Phys. D: Appl. Phys., vol 8, 1975, pp. 1575 to 1585; the transmission through a liquid crystal cell is given by

$$T(\lambda,d) \approx \{\sin[\theta x(1 + u^2)^{1/2}]\}^2/(1 + u^2)$$

where:

$u = u(\lambda,d) \approx \pi x d x \Delta n/\theta x \lambda$

$\Delta n$ is the birefringence of the material

$\theta \approx 90$ deg

$\lambda$ = radiation wavelength, and

d = thickness of the liquid crystal.

Referring to Fig. 2, a plot of the optical transmission $T(\lambda,d)$ is shown as a function of thickness, d, of the liquid crystal medium. As will be clear from Fig. 2, each wavelength reaches the minimum transmission value at different thicknesses of liquid crystal medium. Comparing the graphs 9A-9C of Fig. 1 with the plot of transmission versus thickness of liquid crystal demonstrates that, for a single thickness of liquid crystal material, undesired radiation will always be transmitted by the cell, i.e., the first transmission minimum for the three colors is different. Therefore, the contrast ratio, the ratio of radiation transmitted in the transmitting mode of the cell versus the transmission of radiation in the nontransmitting mode of the cell will be reduced.

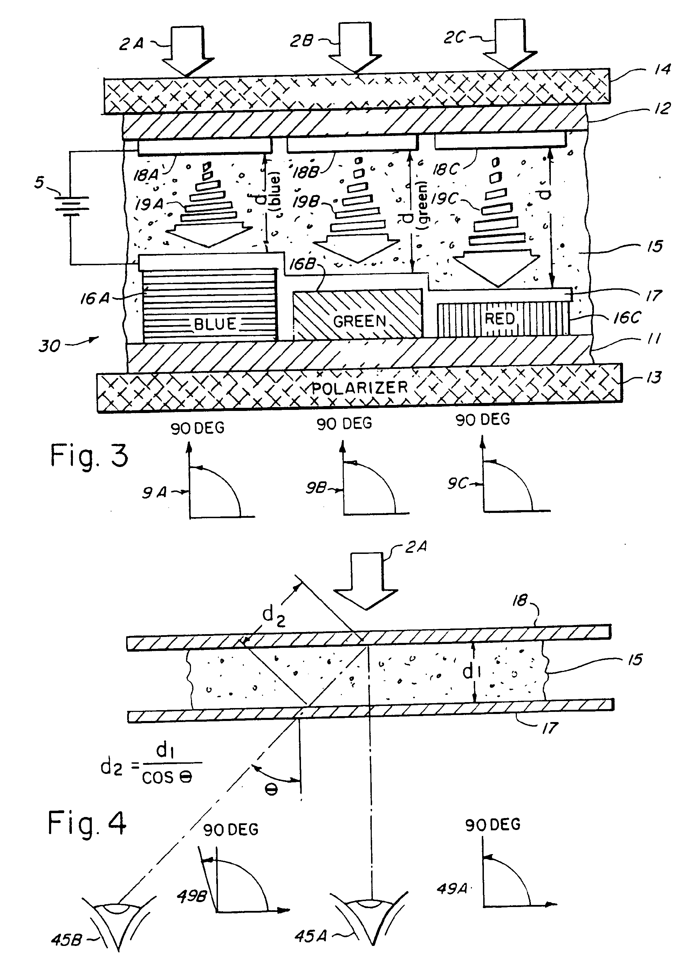

In US-A-4 632 514 corresponding to EP-A-0 152 827, the contrast ratio for a twisted nematic liquid crystal flat panel display is improved by providing a thickness of the liquid crystal medium that is dependent on the filter through which the radiation passes. Referring to Fig. 3, the configuration of Fig. 1 is generally reproduced. However, the important difference is the blue radiation 19A, the green radiation 19B, and the red radiation 19C each travels through a different thickness of twisted nematic liquid crystal 15. The thickness d(blue) of liquid crystal material through which the blue radiation 19A travels, the thickness d-

(green) of liquid crystal through which the green radiation 19B travels, and the thickness d(red) of liquid crystal material through which the red radiation 19C is determined by the first minima of the optical transmission of Fig. 2. The result is that for each of the three component color radiation, the rotation of the polarized radiation resulting from the passage through the liquid crystal material is substantially 90° as shown in graphs 9A-9C.

The display described above provides a high contrast ratio for radiation viewed substantially perpendicular to the glass substrates, i.e., along the display axis. However, in many applications in which the use of liquid crystal displays would be most advantageous, the display must be viewed from an off-axis position.

Referring now to Fig. 4, a demonstration is provided illustrating why the contrast ratio is not maintained when the transmitted radiation is viewed off-axis. Impinging radiation 2A of a given color, when viewed on-axis by observer 45A, is rotated substantially 90° (cf. graph 49A) by the transmission through a distance $d_1$ of the liquid crystal material. However, when the observer 45B is viewing the radiation off-axis, the distance travelled by the radiation is $d_2 \approx d_1/\cos\theta$, resulting in a rotation of the radiation in excess of 90°, thereby resulting in a deterioration of the contrast ratio. The contrast ratio deterioration will increase with increasing viewing angle.

A need has therefore been felt for a liquid crystal display in which a high contrast ratio can be achieved for a large range of off-axis viewing angles. In addition, a technique has been needed to reduce the image spatial noise in a liquid crystal display that will reduce the highly perceptible periodic spatial patterns.

It is an object of the present invention to provide an improved flat panel liquid crystal display. In particular the display should have reduced undesired, dark state optical transmission over a wide viewing angle. These and other objects are achieved by the invention as characterized in the independent claims. Preferred details and embodiments of the invention are described in the dependent claims.

The present invention selects a particular thickness of liquid crystal material through which a color component must pass to improve the uniformity of image as a function of viewing angle.

It is still another feature of the present invention to provide a thickness of twisted nematic liquid crystal through which monochromatic radiation must pass which is less than the smallest thickness minimizing the transmission of the radiation with no electric field applied to the liquid crystal.

It is a still further feature of the present invention to provide a flat panel liquid crystal display in which the component color dots of each pixel have a triangular or delta configuration.

## SUMMARY OF THE INVENTION

The aforementioned and other features are accomplished, according to the present invention, by providing; in a twisted nematic, flat panel liquid crystal display; a thickness of liquid crystal material, through which each radiation color component must pass, meeting predetermined requirements. In particular, each radiation color component must pass through a thickness of liquid crystal material that is less than the thickness for providing the smallest distance for which substantially no light is transmitted when the twisted nematic liquid crystal material is not subjected to an electric field. The thickness of the region of transmission can be selected for each radiation color component to provide an improved contrast ratio at an off-axis viewing angle. This configuration provides a generally symmetrical broadening of the luminance with viewing angle, making the display viewable at increased off-axis angles. The color dots of each pixel are arranged in a triangular configuration to minimize the observability of certain types of spatial noise patterns.

These and other features of the invention will be understood upon reading of the following description along with the drawings.

## BRIEF DESCRIPTION OF THE DRAWINGS

Figure 1 is a cross-sectional view of a portion of a flat panel, liquid crystal, color, display.

Figure 2 is a plot of optical transmission light through a twisted nematic, liquid crystal as a function of thickness of the liquid crystal for a plurality of wavelengths.

Figure 3 is a cross-sectional view of the flat panel liquid crystal display of Figure 1 wherein the axial contrast ratio has been improved.

Figure 4 illustrates the reason for the deterioration of the contrast ratio for off-axis viewing of transmitted radiation through a liquid crystal medium.

Figure 5 illustrates the angular dependence of the off-state optical transmission on the thickness of the liquid crystal material for several thicknesses thinner than the minimum thickness.

Figure 6 illustrates the arrangement for color components of a pixel according to the present invention.

Figure 7 illustrates the relationship between the (horizontal) viewing angle and the luminance of a liquid crystal display when the display is in an off-state mode, the display having the delta arrangement of color dots and wherein the thickness of the liquid crystal medium is less than the distance to minimize the on-axis radiation resulting from rotatory dispersion.

Figure 8 illustrates the angular dependence of the luminance for the liquid crystal display of the present invention as a function of grayscale level for transmitted radiation.

Figure 9 illustrates the angular dependence of of the contrast ratio as a function of angle for several grayscale levels.

## DESCRIPTION OF THE PREFERRED EMBODIMENT

### 1. Detailed Description of the Figures

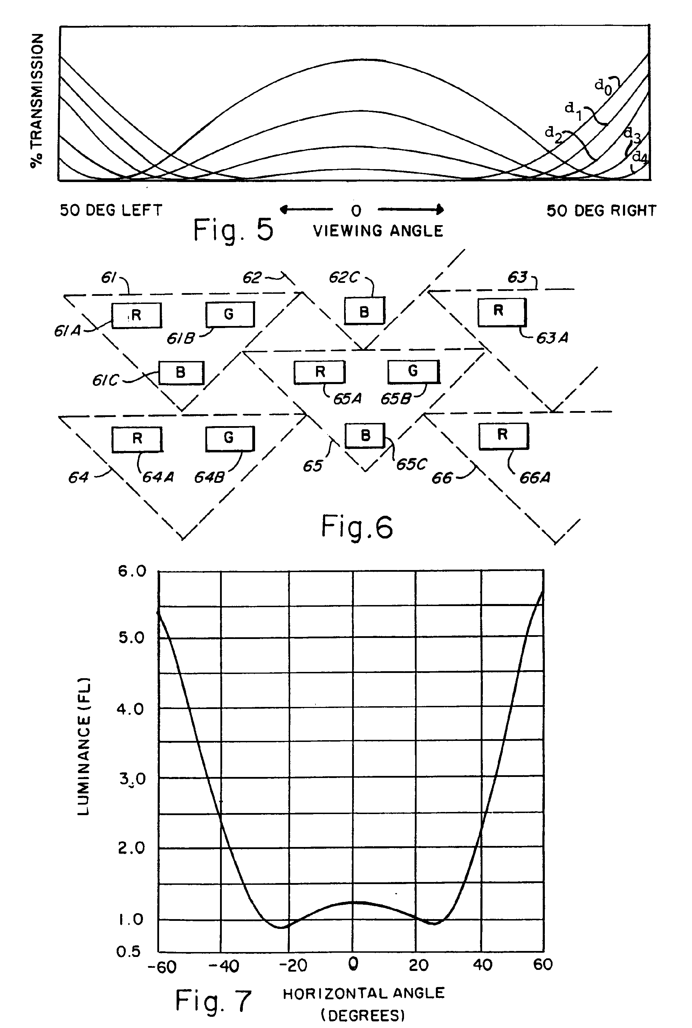

Referring next to Fig. 5, the angular dependence of the transmission of radiation as the thickness of the liquid crystal medium is reduced from the value which produces the highest contrast ratio for on-axis transmission of light. As the thickness of the liquid crystal medium decreases, the zero transmission angle changes from the on-axis orientation to an increasingly large viewing angle. As the thickness of the liquid crystal medium is decreased for the first of the transmission minima, an increasing amount of light is transmitted on-axis, i.e., with a 0° viewing angle.

Referring next to Fig. 6, the arrangement of color components of an image pixel according to the present invention is shown. This arrangement, hereinafter referred to as the delta arrangement or configuration, provides for a plurality of rows of dots, each dot providing a complementary color. The arrangement of the color dots is replicated in a row with a periodicity of three. An adjacent row has the same periodicity, but the color dots are shifted by one and one half color dot positions with respect of the adjacent row. An image pixel 61 is composed of two complementary color dots 61A and 61B from a row and a third complementary color dot 61C from an adjacent row. This arrangement disrupts the patterns produced by certain types of images and, consequently, the patterns become less discernable to an observer.

Referring next to Fig. 7, the luminance for a twisted nematic liquid crystal in the off-state is shown. The display has the delta arrangement of color dots for each pixel. The thickness of liquid crystal medium through which each radiation color component passes is less than the thickness for first radiation color component minimum (cf. Fig. 2). The luminance has a local maximum at the on-axis (0°) viewing angle, goes through a relatively symmetric local minimum (at approximately 20°), and increases rapidly thereafter. An extended local region of relatively low off-state-luminance is provided over a relatively large angle.

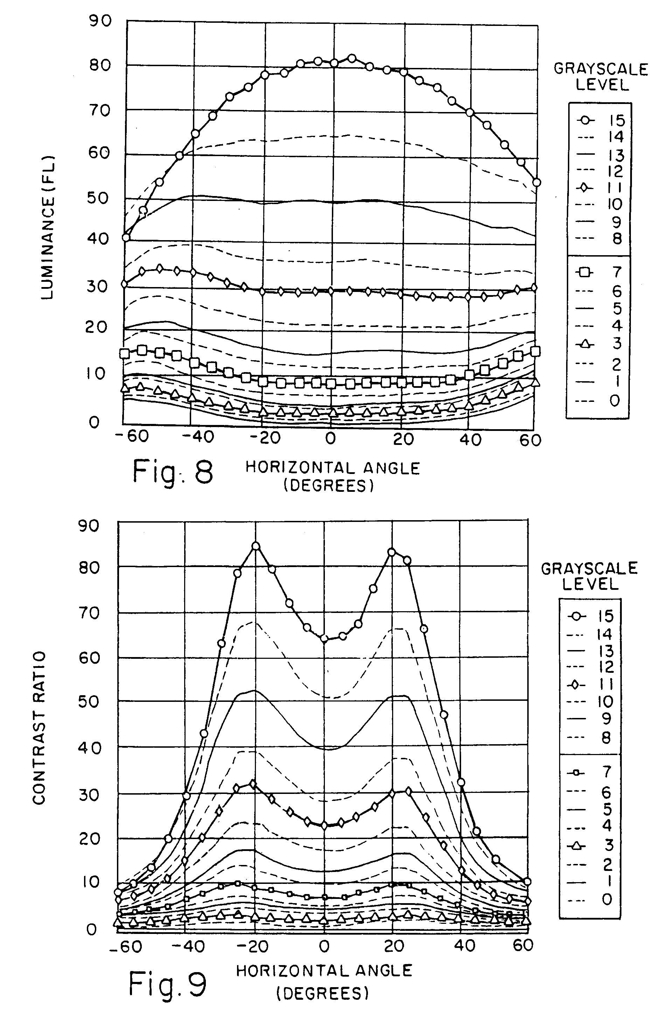

Referring next to Fig. 8, the white radiation for a multiplicity of grayscale levels as a function of (horizontal) viewing angle is shown. The display uses a twisted nematic liquid crystal with the thickness of the liquid crystal, through which each radiation color component travels, that is less than the first minimum derived from minimizing the radiation color component optical dispersion (i.e., the first minimum of Fig. 2 for the radiation color component). For the highest grayscale levels, the radiation has a distinct maximum for the on-axis viewing angle (0°), a result of the substantially completely oriented liquid crystal molecules. Where the liquid crystal molecules are less than completely oriented at lower grayscale levels, relatively uniform luminance is observed over a wide viewing angle.

Referring to Fig. 9, the angular dependence of the contrast ratio for several grayscale levels are shown. Once again, the display is a flat panel, color, liquid crystal display in which the liquid crystal material is a twisted nematic liquid crystal. The thickness of liquid crystal material is less than the thickness providing the first minimum for optical transmission of the radiation color component (i.e., the first minimum of Fig. 2 for the radiation color component). The contrast ratio has a generally symmetric off-axis maxima and has a local minimum generally on-axis (0°). On either side of the maxima, the contrast ratio falls off rapidly with increasing viewing angle.

### 2. Operation of the Preferred Embodiment

The liquid crystal display of the present invention provides a display with a relatively large off-axis viewing angle. The improved viewing angle characteristic is accomplished by determining the first minimum thickness for transmission of monochromatic light through the 90° twisted nematic liquid crystal. The undesired radiation color component resulting for rotatory dispersion is minimized for a normally black twisted nematic liquid crystal display cell having the first minimum thickness. After this thickness has been determined, then the thickness of liquid crystal material through which the monochromatic light must pass is reduced, providing a minimum off-state transmission at an off-axis viewing angle. This display configuration results in a more uniform transmission of radiation as a function of viewing angle, particularly at lower grayscale levels. In addition to the uniformity over a greater angle, the configuration of the present invention results in greater symmetry for the radiation viewed off-axis.

The present invention further envisions that the pixels of the display will be implemented by color dots or subpixels that are arranged in a triangular or delta array. This array disrupts certain spatially oriented image noise and results in the noise patterns being more difficult to observe.

### Claims

1. A flat panel liquid crystal display for displaying color images comprising:
   a) a plurality of pixels (61 - 66), wherein each pixel has

b) a region (15) containing liquid crystal material and a pair of electrodes (17, 18) bounding said liquid crystal material;

c) a first (14) and a second (13) polarizer external to said pair of electrodes; and

d) a color filter (16) determining the color radiation transmitted through said pixel, **characterized in that**

e) the thickness of said liquid crystal material is less than the minimum thickness that would provide minimum transmission of radiation through said liquid crystal material (15) at zero viewing angle when said pixel is at its off-state.

2. The display of Claim 1, **characterized in that**

a) each pixel (61) includes three subpixels (61A - 61C); and

b) each subpixel has a different color filter (16A - 16C) associated therewith.

3. The display of Claim 2, **characterized in that** said subpixels (61A - 66C) include first subpixels (61A - 66A) for transmitting red color radiation, second subpixels (61B - 66B) for transmitting green color radiation, and third subpixels (61C - 66C) for transmitting blue color radiation.

4. A flat panel, liquid crystal display for displaying color images, comprising:

a) a group of first subpixels (61A - 66A), each of said first subpixels having a first filter (16C) for transmitting radiation of a first color through said first subpixels, said first subpixels having a first thickness of liquid crystal material through which said first color radiation is transmitted;

b) a group of second subpixels (61B - 66B), each of said second subpixels having a second filter (16B) for transmitting radiation of a second color through said second subpixels, said second subpixel having a second thickness of liquid crystal material through which said second color radiation is transmitted;

c) a group of third subpixels (61C - 66C), each of said third subpixels having a third filter (16A) for transmitting radiation of a third color through said third subpixel, said third subpixel having a third thickness of liquid crystal material through which said third color radiation is transmitted; and

d) voltage control means coupled to said first, second, and third subpixels for controlling the intensity of optical transmission through each of said subpixels; **characterized in that**

e) said first thickness is less than the minimum thickness that would provide minimum transmission of said first color radiation for a first subpixel off-state at zero viewing angle;

f) said second thickness is less than the minimum thickness that would provide minimum transmission of said second color radiation for a second subpixel off-state at zero viewing angle; and

g) said third thickness is less than the minimum thickness that would provide minimum transmission of said third color radiation for a third subpixel off-state at zero viewing angle.

5. The display of one of the claims 2 to 4, **characterized in that** in each pixel (61 - 66) said subpixels (61A, 61B, 61C) are positioned in a triangular arrangement of said pixel.

6. The display of claim 5, **characterized in that** :

a) different color subpixels (61A, 61B, 62C) are arranged in a first row including a periodic sequence of those subpixels; and

b) a second row including a corresponding sequence of subpixels (61C, 65A, 65B) is located in front of said first row, but is offset with respect to the first row such that the subpixels of the second row are located in front of the gap between adjacent subpixels of the first row.

7. The display of one of the preceding claims, **characterized in that** the thickness of said liquid crystal material has a minimum transmission for an off-state of said liquid crystal material at a viewing angle of approximately 20°.

8. The display of one of the preceding claims, **characterized in that** said liquid crystal material is a twisted nematic liquid crystal.

9. The display of one of the preceding claims, **characterized in that** the polarizers (14, 13) extend parallel to each other and the off-state of a pixel or subpixel occurs when no voltage is applied to said pixel or subpixel, respectively.

**Patentansprüche**

1. Flache Flüssigkristallanzeige zur Widergabe von Farbbildern mit:

a) mehreren Pixeln (61 - 66), wobei jedes Pixel

b) eine Region (15) mit Flüssigkristallmaterial sowie zwei Elektroden (17, 18) aufweist, welche das Flüssigkristallmaterial begrenzen;

c) einen ersten (14) und einen zweiten (13) Polarisator auf der Außenseite der Elektroden aufweist; und

d) ein Farbfilter (16) hat, welches die durch das Pixel übertragene Farbstrahlung bestimmt, **dadurch gekennzeichnet, daß**
e) die Dicke des Flüssigkristallmaterials geringer ist als die minimale Dicke, welche eine minimale Übertragung von Strahlung durch das Flüssigkristallmaterial (15) bei einem Betrachtungswinkel Null ergäbe, wenn sich das Pixel im ausgeschalteten Zustand befindet.

2. Anzeigevorrichtung nach Anspruch 1, dadurch gekennzeichnet, daß
   a) das jedes Pixel (61) drei Subpixel (61A - 61C) aufweist; und
   b) jedem Subpixel ein unterschiedliches Farbfilter (16A - 16C) zugeordnet ist.

3. Anzeigevorrichtung nach Anspruch 2, **dadurch gekennzeichnet**, daß die Subpixel (61A - 66C) erste Subpixel (61A - 66A) für die Übertragung roter Strahlung, zweite Subpixel (61B - 66B) für die Übertragung grüner Strahlung sowie dritte Subpixel (61C - 66C) für die Übertragung blauer Strahlung aufweisen.

4. Flache Flüssigkristallanzeige zur Widergabe von Farbbildern mit:
   a) einer Gruppe erster Subpixel (61A - 66A), von denen jedes ein erstes Filter (16C) für die Übertragung von Strahlung einer ersten Farbe durch das erste Subpixel aufweist und dieses eine erste Dicke des Flüssigkristallmaterials hat, durch welche die Strahlung der ersten Farbe übertragen wird;
   b) einer Gruppe zweiter Subpixel (61B - 66B), von denen jedes ein zweites Filter (16B) für die Übertragung von Strahlung einer zweiten Farbe durch das zweite Subpixel aufweist und dieses eine zweite Dicke des Flüssigkristallmaterials hat, durch welche die Strahlung der zweiten Farbe übertragen wird;
   c) einer Gruppe dritter Subpixel (61B - 66B), von denen jedes ein drittes Filter (16B) für die Übertragung von Strahlung einer dritten Farbe durch das dritte Subpixel aufweist und dieses eine dritte Dicke des Flüssigkristallmaterials hat, durch welche die Strahlung der dritten Farbe übertragen wird; und
   d) eine an die ersten, zweiten und dritten Subpixel angeschlossene Spannungssteuereinrichtung durch Steuerung der Intensität der optischen Übertragung durchjedes der Subpixel, **dadurch gekennzeichnet, daß**
   e) die erste Dicke kleiner als die minimale Dicke ist, welche eine minimale Übertragung der Strahlung erster Farbe durch ein abgeschaltetes erstes Subpixel bei einem Betrachtungswinkel Null ergäbe;

   f) die zweite Dicke kleiner als die minimale Dicke ist, welche eine minimale Übertragung der Strahlung zweiter Farbe durch ein abgeschaltetes zweites Subpixel bei einem Betrachtungswinkel Null ergäbe; und
   g) die dritte Dicke kleiner als die minimale Dicke ist, welche eine minimale Übertragung der Strahlung dritter Farbe durch ein abgeschaltetes drittes Subpixel bei einem Betrachtungswinkel Null ergäbe.

5. Anzeigevorrichtung nach einem der Ansprüche 2 bis 4, **dadurch gekennzeichnet**, daß in jedem Pixel (61 - 66) die Subpixel (61A, 61B, 61C) in einem Dreieck angeordnet sind.

6. Anzeigevorrichtung nach Anspruch 5, **dadurch gekennzeichnet**, daß
   a) Subpixel (61A, 61B, 62C) unterschiedlicher Farbe in einer ersten Zeile mit einer periodischen Folge dieser Subpixel angeordnet sind, und
   b) eine zweite Zeile mit einer entsprechenden Folge von Subpixeln (61C, 65A, 65B) vor der ersten Zeile angeordnet, jedoch gegenüber der ersten Zeile derart versetzt ist, daß die Subpixel der zweiten Zeile vor dem Zwischenraum zwischen benachbarten Subpixeln der ersten Zeile liegen.

7. Anzeigevorrichtung nach einem der vorangehenden Ansprüche, **dadurch gekennzeichnet**, daß die Dicke des Flüssigkristallmaterials eine minimale Übertragung im Abschaltzustand des Flüssigkristallmaterials bei einem Betrachtungswinkel von etwa 20° aufweist.

8. Anzeigevorrichtung nach einem der vorangehenden Ansprüche, **dadurch gekennzeichnet**, daß das Flüssigkristallmaterial ein gedrehter nematischer Flüssigkristall ist.

9. Anzeigevorrichtung nach einem der vorangehenden Ansprüche, **dadurch gekennzeichnet**, daß sich die Polarisatoren (14, 13) parallel zueinander erstrecken und der Abschaltzustand eines Pixels oder Subpixels auftritt, wenn an das Pixel bzw. Subpixel keine Spannung angelegt wird.

**Revendications**

1. Affichage à cristal liquide à panneau plat pour afficher des images en couleurs comprenant :
   a) une pluralité de pixels (61 à 66), dans laquelle chaque pixel comporte
   b) une région (15) contenant le matériau de cristal liquide et une paire d'électrodes (17, 18) liée audit matériau de cristal liquide,

c) des premier (14) et second (13) polariseurs externes à ladite paire d'électrodes, et

d) un filtre de couleur (16) déterminant le rayonnement couleur transmis au moyen dudit pixel, caractérisé en ce que

e) l'épaisseur dudit matériau de cristal liquide est inférieure à l'épaisseur minimale qui assurerait une transmission minimale du rayonnement à travers ledit matériau de cristal liquide (15) sous un angle d'observation nul lorsque ledit pixel est à son état de repos.

2. Affichage selon la revendication 1, caractérisé en ce que

a) chaque pixel (61) comporte trois sous-pixels (61A à 61C), et

b) chaque sous-pixel comporte un filtre de couleur différent (16A à 16C) associé à celui-ci.

3. Affichage selon la revendication 2, caractérisé en ce que lesdits sous-pixels (61A à 66C) comportent des premiers sous-pixels (61A à 66A) pour transmettre le rayonnement de couleur rouge, des seconds sous-pixels (61B à 66B) pour transmettre le rayonnement de couleur verte, et des troisièmes sous-pixels (61C à 66C) pour transmettre le rayonnement de couleur bleue.

4. Affichage à cristaux liquides à panneau plat pour afficher des images en couleurs comprenant :

a) un groupe de premiers sous-pixels (61A à 66A), chacun desdits premiers sous-pixels ayant un premier filtre (16C) pour transmettre le rayonnement d'une première couleur par l'intermédiaire desdits premiers sous-pixels, lesdits premiers sous-pixels ayant une première épaisseur de matériau de cristal liquide à travers laquelle ledit premier rayonnement couleur est transmis,

b) un groupe de seconds sous-pixels (61B à 66B), chacun desdits seconds sous-pixels ayant un second filtre (16B) pour transmettre le rayonnement d'une seconde couleur par l'intermédiaire desdits seconds sous-pixels, lesdits seconds sous-pixels ayant une seconde épaisseur de matériau de cristal liquide à travers laquelle ledit second rayonnement couleur est transmis,

c) un groupe de troisièmes sous-pixels (61C à 66C), chacun desdits troisièmes sous-pixels ayant un troisième filtre (16A) pour transmettre le rayonnement d'une troisième couleur par l'intermédiaire desdits troisièmes sous-pixels, lesdits troisièmes sous-pixels ayant une troisième épaisseur de matériau de cristal liquide à travers laquelle ledit troisième rayonnement couleur est transmis, et

d) un moyen de commande de tension couplé aux premier, second et troisième sous-pixels pour commander l'intensité de la transmission optique à travers chacun desdits sous-pixels, caractérisé en ce que

e) ladite première épaisseur est inférieure à l'épaisseur minimale qui assurerait une transmission minimale dudit premier rayonnement de couleur pour un premier sous-pixel à l'état de repos sous un angle d'observation nul,

f) ladite seconde épaisseur est inférieure à l'épaisseur minimale qui assurerait une transmission minimale dudit second rayonnement de couleur pour un second sous-pixel à l'état de repos sous un angle d'observation nul,

g) ladite troisième épaisseur est inférieure à l'épaisseur minimale qui assurerait une transmission minimale dudit troisième rayonnement de couleur pour un troisième sous-pixel à l'état de repos sous un angle d'observation nul.

5. Affichage selon l'une quelconque des revendications 2 à 4, caractérisé en ce que dans chaque pixel (61 à 66), lesdits sous-pixels (61A, 61B, 61C) sont positionnés en une disposition triangulaire dudit pixel.

6. Affichage selon la revendication 5, caractérisé en ce que :

a) des sous-pixels de couleurs différentes (61A, 61B, 62C) sont disposés dans une première rangée comportant une séquence périodique de ces sous-pixels, et

b) une seconde rangée comportant une séquence correspondante de sous-pixels (61C, 65A, 65B) est placée devant ladite première rangée mais est décalée par rapport à la première rangée, de sorte que les sous-pixels de la seconde rangée soient placés devant l'intervalle entre les sous-pixels contigus de la première rangée.

7. Affichage selon l'une des revendications précédentes, caractérisé en ce que l'épaisseur dudit matériau de cristal liquide présente une transmission minimale pour un état de repos dudit matériau de cristal liquide sous un angle d'observation d'approximativement 20°.

8. Affichage selon l'une des revendications précédentes, caractérisé en ce que ledit matériau de cristal liquide est un cristal liquide nématique en hélice.

9. Affichage selon l'une des revendications précédentes, caractérisé en ce que les polariseurs (14, 13) s'étendent parallèlement l'un à l'autre et que l'état de repos d'un pixel ou d'un sous-pixel se produit lorsqu'aucune tension n'est appliquée audit pixel ou sous-pixel, respectivement.

2A    2B    2C

POLARAIZER    14

GLASS    12

18A    18B    18C

5    19A    19B    19C

16B    15

17

16A    BLUE    GREEN    RED    16C

10    GLASS    11

POLARIZER    13

90 DEG    90 DEG    90 DEG

9A    9B    9C

## Fig. 1

%TRANSMISSION

GREEN
RED
BLUE

d (CELL GAP)

## Fig. 2

Fig. 3

$$d_2 = \frac{d_1}{\cos \Theta}$$

Fig. 4

Fig. 5

Fig.6

Fig. 7

Fig. 8

HORIZONTAL ANGLE
(DEGREES)

Fig. 9

HORIZONTAL ANGLE
(DEGREES)